# EUROPEAN PATENT SPECIFICATION

(11) **EP 1 821 465 B1**
(45) Date of publication and mention of the grant of the patent: **27.05.2009**
(21) Application number: 06705520.2
(22) Date of filing: 20.01.2006
(51) Int. Cl.: H04W 4/06, H04W 4/08

(54) **A METHOD FOR IMPLEMENTING THE DEACTIVATION OF THE MULTIMEDIA BROADCAST MULTICAST SERVICE**
VERFAHREN ZUR DEAKTIVIERUNG EINES MULTIMEDIA-BROADCAST-MULTICAST-DIENSTES
PROCEDE DE DESACTIVATION DU SERVICE DE DIFFUSION MULTIDIFFUSION MULTIMEDIAS

(30) Priority: 20.01.2005 CN 200510002527
(43) Date of publication of application: 22.08.2007
(73) Proprietor: Huawei Technologies Co., Ltd., Longgang District, Shenzhen Guangdong 518129 (CN)
(72) Inventor: ZHANG, Hai, Shenzhen Guangdong_518129 (CN); DUAN, Chang Huawei Administration Building, Shenzhen 518129, Guangdong (CN)
(74) Representative: Manitz, Finsterwald & Partner GbR
(86) International application number: PCT/CN2006/000099
(87) International publication number: WO 2006/076865

(56) References cited:
- CN-A- 1 499 761
- CN-A- 1 499 765
- "Universal Mobile Telecommunications System (UMTS); Multimedia Broadcast/Multicast Service (MBMS); Architecture and functional description (3GPP TS 23.246 version 6.5.0 Release 6); ETSI TS 123 246" ETSI STANDARDS, LIS, vol. 3-SA2, no. V6.5.0, 1 December 2004 (2004-12-01), XP014027539 ISSN: 0000-0001

## Description

### Field of the Technology

The present invention relates to multimedia broadcast multicast technologies, and particularly, to a method and a system for deactivating a Multimedia Broadcast Multicast Service (MBMS).

### Background of the Invention

Along with the development of 3^{rd} Generation (3G) mobile communications technologies, a 3G mobile communication system provides higher data rate than a 2G mobile communication system and thus supports varieties of services, such as video phone, picture downloading, high-speed internet surfing, etc. One type of the services has a feature that a service, such as weather forecast, a newsreel service and sports broadcast collections, etc., can be simultaneously sent to the users subscribing to the service in a radio network. The concept of broadcast and multicast is thus introduced into the 3G mobile communication due to such a feature of simultaneously sending of services.

3GPP TS 23.246 version 6.5.0 Release 6 shows that MBMS is a point-to-multipoint service in which data is transmitted from a single source entity to multiple recipients. The MBMS bearer service offers two modes: Broadcast Mode and Multicast Mode. In section 8.7 MBMS Multicast Service Deactivation of this document, it is stated that the multicast service deactivation is a signalling procedure between the UE and the network. The procedure removes the MBMS UE Context from the UE, RAN, SGSN and GGSN for a particular MBMS multicast service. One MBMS context is deleted in response to a request message carrying a remove indication.

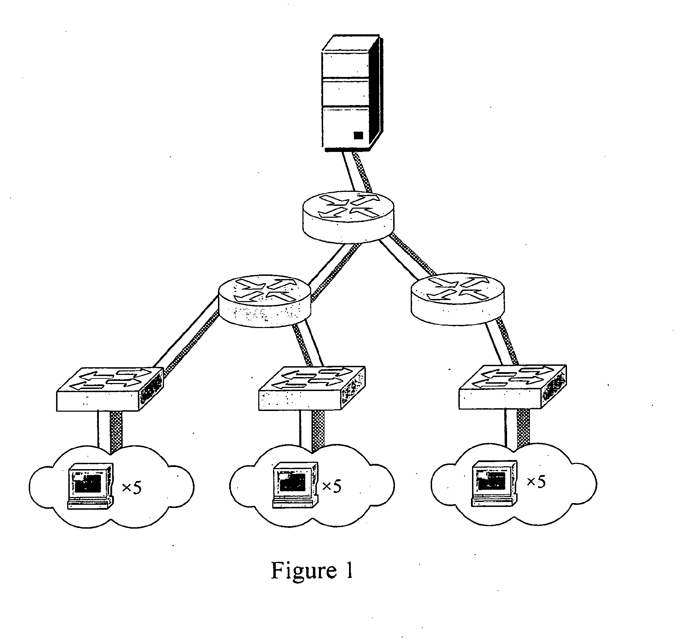

As shown in Figure 1, no matter how many downstream nodes of an intermediate node are expecting to receive data, an upstream node of the intermediate node always sends one copy of the data to the intermediate node; after receiving the data, the intermediate node replicates the data according to the number of its downstream nodes and distributes the data to the downstream nodes. Thus, only one copy of the data is transmitted on each branch of the transmission tree of an MBMS service, occupying one share of transmission resources, so does the data transmission between a root node and the downstream nodes thereof. The difference between a multicast service and a broadcast service is that the multicast service sends information only to the users having subscribed to the information while the broadcast service sends information to all the users in a radio network. As can be seen from the above description, many network resources can be saved by using an MBMS service to provide identical information to a large number of users simultaneously.

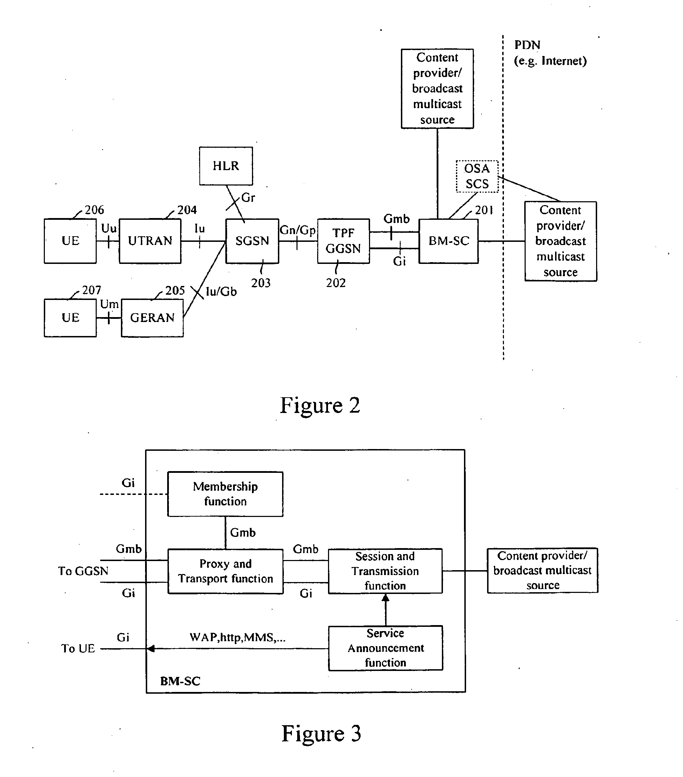

Figure 2 is a schematic diagram illustrating the architecture of a radio network supporting broadcast multicast services. As shown in Figure 2, in the 3^{rd} Generation Partner Project (3GPP), a radio network entity supporting an MBMS service is Broadcast/Multicast Service Center (BM-SC) 201. BM-SC 201 is connected to TPF Gateway GPRS Support Node (GGSN) 202 through the Gmb interface or the Gi interface and BM-SC 201 can be connected to a plurality of TPF GGSN 202; TPF GGSN 202 is connected to Serving GPRS Support Node (SGSN) 203 through the Gn/Gp interface and GGSN 202 can be connected to a plurality of SGSN 203; SGSN 203 can be connected to Universal Terrestrial Radio Access Network (UTRAN) 204 of the Universal Mobile Telecommunication System (UMTS) through an Iu interface and UTRAN 204 is connected to User Equipment (UE) 206 through a Uu interface; SGSN 203 can also be connected to the Global Enhanced Radio Access Network (GERAN) 205 of the Global System for Mobile communication (GSM) through the Iu/Gb interface and then GERAN 205 is connected to UE 207 through the Um interface. The GGSN and the SGSN are nodes in the core network (CN) in a radio network.

The BM-SC, which serves as a broadcast/multicast service center, provides functions for MBMS user service provisioning and delivery, and exists for each MBMS user service. The BM-SC may serve as an entry point for content provider MBMS transmissions, used to authorize and initiate MBMS bearer services within a Public Land Mobile Network (PLMN), and the BM-SC may be used to schedule and deliver MBMS transmissions.

The BM-SC is a function entity and as shown in Figure 3, includes 4 sub-functions: Membership function, Session and Transmission function, Proxy and Transport function, and Service Announcement function. The Membership function provides authorization for a UE requesting to activate an MBMS service, may hold subscription data of MBMS service users, and may generate charging records for the MBMS service users. Though the Membership function is an MBMS bearer service level, it may also provide a user service level function, such as membership management and key management, and in this case, there is a Gi interface. The BM-SC Session and Transmission function can schedule MBMS session transmissions. The BM-SC Proxy and Transmission function is a Proxy Agent used for signalling over the Gmb reference point between GGSNs and other BM-SC sub-functions such as the BM-SC Membership function and the BM-SC Session and Transmission function. Moreover, the BM-SC Proxy and Transmission function can also handle when BM-SC functions for different MBMS services are provided by multiple physical network elements, and routing of different signalling interactions shall be transparent to the GGSN. The BM-SC Service Announcement function can provide service announcement for broadcast and multicast MBMS user services.

The MBMS multicast service activation procedure registers a user in a network to enable the user to receive data from a specific multicast MBMS bearer service. The activation is a signalling procedure between a UE and the network, which creates MBMS UE contexts in the UE, an SGSN, a GGSN and a BSC/RNC for each user having activated the multicast MBMS bearer service. The creation of MBMS UE contexts is similar to the creation of a regular PDP context. In an MBMS multicast service deactivation procedure, the MBMS UE contexts of a user will be removed when the user leaves the MBMS multicast service.

The MBMS UE context contains specific information related to a particular MBMS bearer service that the UE has joined. In the UE and the SGSN, the MBMS UE context is stored as part of the mobility management (MM) context for the UE; in the GGSN, the MBMS UE context is stored singly. There is one MBMS UE context per MBMS bearer service that the UE has joined.

As shown in Table 1, an MBMS UE context includes: IP multicast address, Access Point Name (APN), GGSN address in use, SGSN address in use, Temporary Mobile Group Identity (TMGI), the Linked Network layer Service Access Point Identifier (NSAPI) and International Mobile Subscriber ID (IMSI). IP multicast address is used for identifying an MBMS bearer that the UE has joined; APN is an access point name on which the IP multicast address of the IP multicast address is defined; TMGI is the temporary mobile group identity allocated to the MBMS bearer; the Linked NSAPI is the NSAPI of the PDP context used by the UE to carry the Internet Group Management Protocol/Multicast Listener Discovery (IGMP/MLD) signalling; IMSI identifying the user; TI is a transaction identifier; MBMS NSAPI is used for identifying an MBMS UE context.

**Table 1**

| Parameter | description | UE | SGSN | GGSN | RNC | BSC | BM-SC |
|---|---|---|---|---|---|---|---|
| IP multicast address | IP multicast address identifying an MBMS bearer that the UE has joined | X | X | X | X | Iu-X Gb-none | X |
| APN | Access Point Name on which this IP multicast address is defmed | X | X | X | X | Iu-X Gb-none | X |
| GGSN address in use | The IP address of theGGSN currently used | | X | | | | |
| SGSN address | | | | X | | | |
| TMGI | Temporary Mobile Group Identity allocated to the MBMS bearer | X | X | | X | Iu-X Gb-none | |
| Linked NSAPI | the NSAPI of the PDP context used by the UE to carry IGMP/MLD signalling | X | X | | | | |
| IMSI | IMSI identifying the user | (1) | (1) | | (2) | Iu-(2) Gb-(3) | X |
| TI | Transaction identifier | X | X | | | | |
| MBMS_NSA PI | Network layer Service Access Point identifier which identifies an MBMS UE context | X | X | X | X | | |

In Table 1, (1) means that, in the UE and the SGSN, the IMSI is available within the MM context containing the MBMS UE context; (2) means that in the RNC, the IMSI is available within the UE context containing the MBMS UE context; (3) means that the IMSI availability does not depend on MBMS.

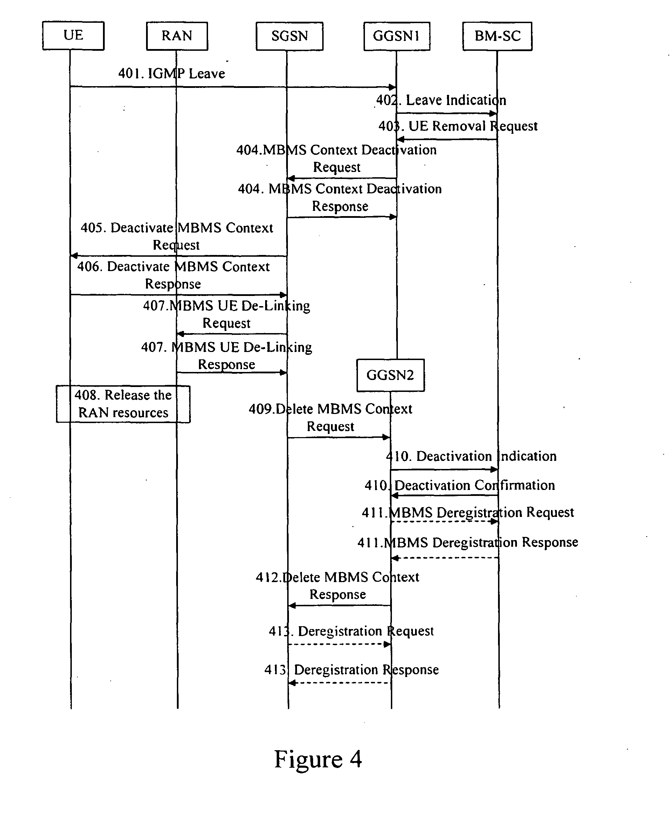

As shown in Figure 4, a normal MBMS service deactivation procedure in the prior art includes the following steps.

Step 401: a UE sends an IGMP leave message (IGMP Leave) or an MLD leave message(MLD Leave) over a default PDP context to a GGSN to leave a particular multicast service identified by an IP multicast address.

The UE shall send an IGMP join message (IGMP Join) to the GGSN1 if the IPv4 is adopted; and the UE shall send an MLD join message to the GGSN1 if the IPv6 is adopted. In this procedure, the IPv4 is adopted and the GGSN corresponding to the default PDP context is GGSN1.

Step 402: GGSN1 sends to a BM-SC proxy and transmission function a leave indication message (Leave Indication) carrying the IP multicast address, the APN and the IMSI, and the leave indication message indicates that the UE is requesting to leave the multicast service identified by the IP multicast address, and the leave indication message is forwarded to a BM-SC Membership function.

Step 403: the BM-SC Membership function sends a UE Removal Request message carrying the IP multicast address, the APN and the IMSI to GGSN1 having originated the leave indication message upon receiving the leave indication message and verifying that the IP multicast address corresponds to a valid MBMS service. The APN shall be the same as that provided during the service activation. The BM-SC Membership function may also initiate an MBMS UE context deactivation procedure by directly sending a UE Removal Request message to GGSN1.

Step 404: GGSN1 sends an MBMS UE Context Deactivation Request message including the IP multicast address, the APN and the IMSI to the SGSN upon receiving the UE Removal Request message or for reasons of GGSN1 itself. The IP multicast address, the APN and the IMSI jointly identify the MBMS UE context to be deleted by the SGSN. The APN in this step is the APN received in Step 403. The SGSN acknowledges receipt of the MBMS UE Context Deactivation Request message by sending an MBMS UE Context Deactivation Response message to GGSN1.

Step 405: the SGSN sends a Deactivate MBMS Context Request message carrying a TI identifying the MBMS UE context to be deleted by the UE, to the UE upon receiving the MBMS UE Context Deactivation Request message or for reasons of the SGSN itself.

Step 406: the UE deletes the MBMS UE context and sends a Deactivate MBMS Context Response message carrying the TI to the SGSN.

Step 407: the SGSN sends an MBMS UE De-Linking Request message carrying the IP multicast address, the APN and the TMGI to an RNC if the UE is in a Packet Mobility Management (PMM)-CONNECTED state and has been linked towards the RAN; the RAN deletes the MBMS UE context and sends an MBMS UE De-Linking Response message including the TMGI to the SGSN.

Step 408: the RAN releases radio resources if dedicated radio resources are assigned to the UE for transmitting MBMS data; the RAN may decide to move the remaining UEs to the dedicated radio resources if shared radio resources are assigned to the distribution of the MBMS data currently. This step is optional.

Step 409: the SGSN sends a Delete MBMS Context Request message carrying the MBMS_NSAPI to GGSN2 holding the MBMS UE context upon receiving the Deactivate MBMS Context Response message or for reasons of the SGSN itself. In this procedure, the GGSN that in fact provides the needed MBMS services is GGSN2, and GGSN2 may be the same GGSN as GGSN1 and may also be different from the GGSN1 receiving the IGMP Leave message in Step 401.

Step 410: GGSN2 deletes the MBMS UE context and sends a Deactivation Indication message to the BM-SC to confirm that the MBMS UE context deactivation is successful. The BM-SC deletes the MBMS UE context and sends a Deactivation Confirmation message to the GGSN2 upon receiving the Deactivation Indication message.

Step 411: GGSN2 sends an MBMS De-registration Request message to the BM-SC proxy and transmission function if there is no user receiving the MBMS multicast service in GGSN2 and the "list of downstream nodes" in the corresponding MBMS bearer context is empty. The BM-SC proxy and transmission function responds with an MBMS De-registration Response message and removes the identifier of GGSN2 from the "downlink stream node list" in MBMS Bearer Context of the BM-SC. This step is optional.

Step 412: GGSN2 confirms that the MBMS UE context has been deactivated by sending a Delete MBMS Context Response message to the SGSN then deleting the MBMS UE context.

Step 413: the SGSN sends an MBMS Deregistration Request message to GGSN2 if there is no user receiving the MBMS multicast service in the SGSN and the "list of downstream nodes" in the corresponding MBMS bearer context is empty. GGSN2 responds with an MBMS De-registration Response message and removes the identifier of the SGSN from the "list of downstream nodes" in its MBMS bearer context.

As can be seen from the above steps, in the MBMS service deactivation procedure, the MBMS UE contexts in the UE, the SGSN and the GGSN are deleted. The MBMS service deactivation procedure may be initiated by the UE, the SGSN, the BM-SC or the GGSN. The deactivation procedure initiated by the UE starts with Step 401; the deactivation procedure initiated by the BM-SC starts with Step 403; the deactivation procedure initiated by the GGSN starts with Step 404; the deactivation procedure initiated by the SGSN starts with Steps 405 and 409; the MBMS UE De-linking is performed in Step 407.

At GPRS detach, or during an SGSN routing area update, all the MBMS UE contexts of a UE will be deleted in the UE, the SGSN and the GGSN, that is, a GPRS detach procedure or an SGSN routing area update procedure makes the SGSN initiate a deactivation procedure. Specifically, the SGSN initiated deactivation procedure starts with Step 409. The SGSN routing area update only refers to the SGSN routing area update in which the new SGSN does not support an MBMS service.

Because the MBMS UE context of each MBMS service is linked to a PDP context by the linked NSAPI, the SGSN will also perform a deactivation procedure if a PDP context linked to MBMS UE contexts is deactivated by the UE, the SGSN or the GGSN. Specifically, the SGSN starts the MBMS deactivation procedure with Steps 405 and 409.

In the conventional technical specification, it is possible that all the corresponding MBMS UE contexts need to be deactivated on both the network side and the terminal side because a UE performs the GPRS detach or the SGSN routing area update, or deletes the default PDP context. Because a user may have applied tens of MBMS bearer services, Steps 405 ∼ 413 will be performed repeatedly tens of times to delete the MBMS UE contexts corresponding to all the MBMS services according to the conventional procedure when needing to perform a deactivation procedure. Obviously the whole procedure is redundant. As a result, not only the efficiency is reduced, but also complexity of the devices is increased. And especially, since so much repeated signalling is performed in air interfaces, utilization of the radio resources is reduced significantly.

### Summary of the Invention

Embodiments of the invention provide a method and a system for deactivating a Multimedia Broadcast Multicast Service, which enables the related MBMS UE contexts to be deleted one time through a simple procedure. Thus, not only the complexity of devices is decreased, but also the utilization of radio interfaces is improved greatly.

The technical solution in accordance with the embodiments of the invention is given by a method and a system according to the appended claims.

In the method for implementing deactivation of a Multimedia Broadcast Multicast Service provided by the embodiments of the present invention, all the related MBMS UE contexts to be deleted may be deleted by means of one message in the related steps since the SGSN selects an appropriate occasion to initiate a deactivation procedure and notifies, through carrying a remove indication in the message, the related network entities that all the related MBMS UE contexts shall be deleted. Thereby, the procedure redundancy, which is caused by performing the same steps repeatedly, is avoided in the case that a UE has applied a plurality of MBMS bearer services, and thus, not only the complexity of the procedure is reduced and efficiency is improved, but also load of devices of a core network is decreased and the utilization of radio resources is improved.

In addition, the present invention provides multiple implementation methods for different cases, and thus, is applicable in a wide range and the implementation is flexible, convenient and simple.

### Brief Description of the Drawings

Figure 1 shows a schematic diagram illustrating the transmission principle of a multicast service.
Figure 2 shows a schematic diagram illustrating the architecture of a radio network supporting a broadcast multicast service.
Figure 3 shows a schematic diagram illustrating the functional structure of a BM-SC function.
Figure 4 shows a flow chart of a method for deactivating an MBMS service in the prior art.
Figure 5 shows a flow chart of a method for deactivating an MBMS service in accordance with an embodiment of the present invention.
Figure 6 shows a flow chart of a method for deactivating an MBMS service in accordance with another embodiment of the present invention.
Figure 7 shows a flow chart of a method for deactivating an MBMS service in accordance with another embodiment of the present invention.

### Detailed Description of the Invention

Embodiments of the present invention include: in a GPRS detach procedure or in a PDP context deactivation procedure, an SGSN shall select an appropriate occasion to initiate a deactivation procedure and instruct, through carrying a remove indication in a message, the related network entities to delete related MBMS UE contexts.

The remove indication may be only a flag, for example, may be set as one bit. There are two different methods for using the remove indication. In the first method, if the remove indication is carried, it is indicated that the related MBMS UE contexts need to be deleted, and if the remove indication is not carried, it is indicated that the related MBMS UE contexts do not need to be deleted. In the second method, the re' move indication is always carried in interaction messages between network entities and indicates whether the related MBMS UE contexts need to be deleted by means of different values. For example, the remove indication having the value of 0 indicates that the related MBMS UE contexts do not need to be deleted while the remove indication having the value of 1 indicates that the related MBMS UE contexts are to be deleted; or, the remove indication having the value of true indicates that the related MBMS UE contexts need to be deleted while the remove indication having the value of false indicates that the related MBMS UE contexts are not to be deleted.

The remove indication may also include identifiers of one or more MBMS UE contexts to be deleted, and the remove indication is carried in a message. For example, a remove indication is carried in an MBMS UE Context Deactivation Request message. The remove indication may also be an identifier carried in a message and indicating that all the MBMS UE contexts related to a designated UE are to be deleted.

In the case that the remove indication is a flag, the first method, in which carrying or not carrying the remove indication indicates whether related MBMS UE contexts need to be deleted or do not need to be deleted, is taking as the example hereinafter.

There are three cases of appropriate occasions.

① In the case of a GPRS detach procedure or an SGSN routing area update procedure in which the new SGSN does not support the MBMS, if a UE, an SGSN or a GGSN initiates the GPRS detach procedure or the SGSN routing area update procedure for the UE, the SGSN may start a deactivation procedure with Step 407 or 409 shown in Figure 4 to delete related MBMS UE contexts of the UE in the UE, the SGSN and the GGSN. If the remove indication includes identifiers of MBMS UE contexts contained in a message, the related MBMS UE contexts to be deleted are at least one or all of the MBMS UE contexts identified by the identifiers. Practically, with respect to the case that all the MBMS UE contexts related to certain UE are to be deleted, a special identifier may also be used to indicate that all the related MBMS UE contexts are to be deleted, and the special identifier is carried in a message.

② In the case of a PDP context deactivation, if a PDP context linked to MBMS UE contexts by a linked NSAPI is deactivated by a UE, an SGSN or a GGSN, the SGSN also starts a deactivation procedure with Step 407 or 409 shown in Figure 4 to delete related MBMS UE contexts linked to the deactivated PDP context. In this case, if the remove indication includes identifiers of MBMS UE contexts contained in a message, the related MBMS UE contexts to be deleted are at least one or all of the MBMS UE contexts identified by the identifiers. Practically, with respect to the case that all the MBMS UE contexts related to certain UE are to be deleted, a special identifier may also be used to indicate that all the related MBMS UE contexts are to be deleted, and the special identifier is carried in a message.

③ In the case that a PDP context linked to MBMS UE contexts by a linked NSAPI is deactivated by UE, an SGSN or a GGSN, the SGSN may also starts a deactivation procedure with Step 405 shown in Figure 4 to delete related MBMS UE contexts linked to the deactivated PDP context so as to guarantee that the UE side can delete the corresponding MBMS UE contexts. In this case, if the remove indication includes identifiers of MBMS UE contexts contained in a message, the related MBMS UE contexts to be deleted are at least one or all of the MBMS UE contexts identified by the identifiers. Practically, with respect to the case that all the MBMS UE contexts related to certain UE are to be deleted, a special identifier may also be used to indicate that all the related MBMS UE contexts are to be deleted, and the special identifier is carried in a message.

Hereinafter entities, such as a BM-SC, a GGSN, an SGSN, an RAN or a UE, deletes all the MBMS UE contexts related to the designated UE are taken as examples. However, all the described procedures and cases are applicable to the case of deleting designated MBMS UE contexts.

There are three cases of deactivation procedures corresponding to the above three cases of appropriate occasions for the SGSN to initiate a deactivation procedure.
a) An SGSN sends an MBMS UE De-Linking Request message carrying a remove indication to an RAN when starting a deactivation procedure with Step 407, and the RAN deletes all the MBMS UE contexts stored in the RAN and related to the corresponding UE. Accordingly, in the subsequent Step 409, the SGSN sends a Delete MBMS Context Request message carrying a remove indication to a GGSN, and the GGSN deletes all the MBMS UE contexts stored in the GGSN and related to the corresponding UE. In the subsequent Step 410, the GGSN sends a Deactivation Indication carrying the remove indication to the BM-SC, and the BM-SC deletes all the MBMS UE contexts stored in the BM-SC and related to the corresponding UE. In the subsequent Step 412, the GGSN returns a Delete MBMS Context Response message to the SGSN, and the SGSN deletes all the MBMS UE contexts stored in the SGSN and related to the corresponding UE.
b) A SGSN sends a Delete MBMS Context Request message carrying a remove indication to a GGSN when starting a deactivation procedure with Step 409, and the GGSN deletes all the MBMS UE contexts stored in the GGSN and related to the corresponding UE. In the subsequent Step 410, the GGSN sends a Deactivation Indication carrying a remove indication to a BM-SC, and the BM-SC deletes all the MBMS UE contexts stored in the BM-SC and related to the corresponding UE. In the subsequent Step 412, the GGSN returns a Delete MBMS Context Response message to the SGSN, and the SGSN deletes all the MBMS UE contexts stored in the SGSN and related to the corresponding UE.
c) The SGSN sends a Deactivate MBMS Context Request message carrying a remove indication to the UE when starting a deactivation procedure with Step 405, and the UE deletes all the MBMS UE contexts store in the UE and related to the corresponding UE. The subsequent steps are the same as Steps 407, 409, 410 and 412 in the case a).

With respect to the process of deleting MBMS UE contexts in a UE, there are two cases to be considered respectively.

In the first case, a UE needs to delete related MBMS UE contexts locally in a GPRS detach procedure or an SGSN routing area update procedure due to a GPRS detach or an SGSN routing area update. Specifically, if the GPRS detach procedure or the SGSN routing area update procedure is initiated by the UE, the UE automatically deletes the MBMS UE contexts stored locally. If the GPRS detach procedure or the SGSN routing area update procedure is initiated by the network side, the UE deletes the MBMS UE contexts stored locally after receiving a detach Request message from the SGSN. Refer to the 3GPP 23.060 specification for the detailed GPRS detach procedure or the SGSN routing area update procedure. Both the two procedures are standard procedures defined by the 3GPP and will not be described herein.

In the second case, since a PDP context linked to MBMS UE contexts of a UE is deactivated, the UE needs to delete related MBMS UE contexts locally. Specifically, if a PDP context deactivation procedure is initiated by the UE, the UE deletes the MBMS UE contexts stored locally after receiving a Deactivate PDP Context Response message sent by the SGSN to the UE. If the PDP context deactivation procedure is initiated by the SGSN or the GGSN, the UE deletes the MBMS UE contexts stored locally after receiving a Deactivate PDP Context Request message from the SGSN. Refer to the 3GPP 23.060 specification for the detailed PDP context delete procedure, which is a standard procedure defined by the 3GPP and will not be described herein.

In addition, there are two kinds of associations between all the MBMS UE contexts and PDP contexts of a UE. One is that all the MBMS UE contexts corresponding to different MBMSs and activated by the UE are associated with, that is, linked to, one PDP context, such as a default PDP context. The other is that all the MBMS UE contexts corresponding to different MBMSs and activated by the UE are linked to different PDP contexts. Thus, in the case of deactivation of a PDP context, for the former association, deleting all the related MBMS UE contexts is to delete all the MBMS UE contexts of the UE, while for the latter association, deleting all the related MBMS UE contexts is to delete MBMS UE contexts of UE linked to the PDP context deactivated currently.

The method for implementing the deactivation of an MBMS service in accordance with embodiments of the present invention is hereinafter described with reference to drawings and detailed embodiments, based on the above three cases of appropriate occasions of initiating a deactivation procedures and the corresponding processing, as well as two kinds of associations between MBMS UE contexts and PDP contexts. The precondition for implementing Embodiments 1 to 4 is that all the MBMS UE contexts activated by UE are linked to a default PDP context. The precondition for implementing Embodiments 5 and 6 is that the MBMS UE contexts activated by the UE are linked to different PDP contexts.

### Embodiment 1

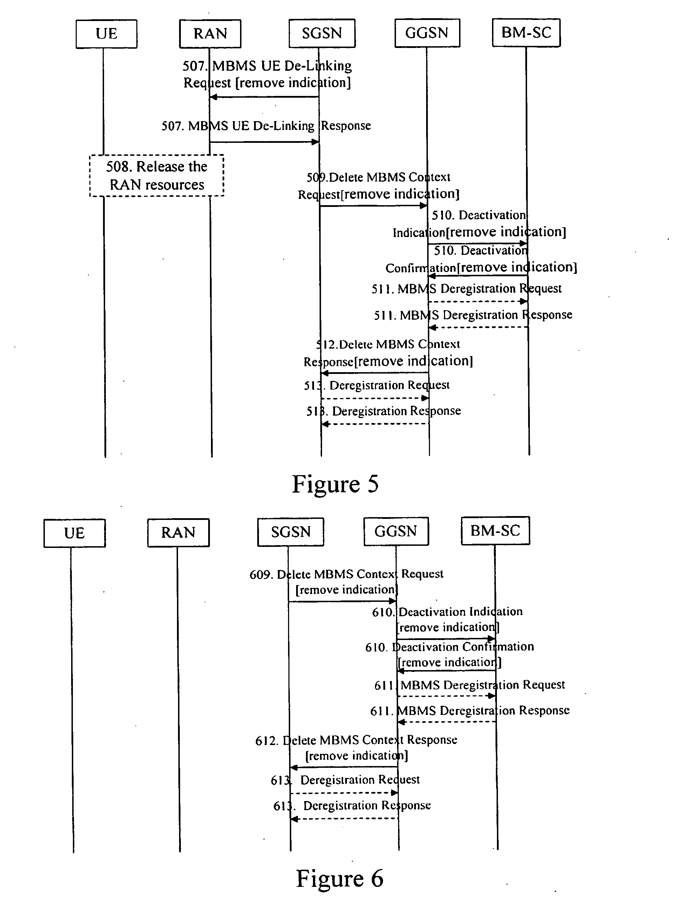

In the present embodiment, UE1 is taken as the example and all the MBMS UE contexts activated by UE1 are linked to a default PDP context. UE1, an SGSN or a GGSN initiates a GPRS detach procedure for UE1 and the state of UE1 stored in the GGSN currently is PMM-CONNECTED, that is, UE1 is in a PMM-CONNECTED state and linked towards an RAN. Accordingly, the SGSN starts an MBMS deactivation procedure with Step 407 shown in Figure 4 to delete all the MBMS UE contexts. As shown in Figure 5, an MBMS deactivation procedure specifically includes the following steps.

Step 507: the SGSN sends an MBMS UE De-Linking Request message, carrying an IP multicast address, an APN and a TMGI, to an RNC in the RAN. And all the MBMS UE contexts corresponding to UE1 in the RAN need to be deleted because a GPRS detach procedure is initiated. Therefore, the MBMS UE De-Linking Request message also contains a remove indication indicating that all the MBMS UE contexts related to UE1 need to be deleted.

After receiving the MBMS UE De-Linking Request message carrying the remove indication, the RAN deletes all its own MBMS UE contexts related to UE1, and sends an MBMS UE De-Linking Response message to the SGSN. The MBMS UE De-Linking Response message at least contains the TMGI and may contain the remove indication.

Step 508: is exactly the same as the processing in Step 408 of the existing deactivation procedure.

Step 509: the SGSN sends a Delete MBMS Context Request message carrying an MBMS NSAPI to the GGSN holding MBMS UE contexts, and the GGSN holding MBMS UE contexts may be different from the GGSN having received the IGMP Leave message. Because the GPRS detach procedure is initiated and the GPRS detach procedure deactivates the PDP context of UE1, all the MBMS UE contexts linked to the deactivated PDP context need to be deleted. Therefore, the Delete MBMS Context Request message also contains the remove indication.

Step 510: After receiving the Delete MBMS Context Request message carrying the remove indication, the GGSN deletes all the MBMS UE contexts stored in the GGSN and related to UE1, and sends a Deactivation Indication message carrying the remove indication to the BM-SC to confirm that the MBMS UE contexts have been deactivated successfully. After receiving the Deactivation Indication message, the BM-SC deletes all the MBMS UE contexts stored in the BM-SC and related to UE1 and sends a Deactivation Confirmation message to the GGSN. The Deactivation Confirmation message may contain the remove indication.

Step 511: is exactly the same as the processing in Step 411 of the existing deactivation procedure.

Step 512: the GGSN sends a Delete MBMS Context Response message to the SGSN to confirm that all the MBMS UE contexts of UE1 have been deleted. The Delete MBMS Context Response message may contain a remove indication.

The SGSN deletes all the MBMS UE contexts stored in the SGSN and related to UE1 after receiving the Delete MBMS Context Response message.

Step 513: is exactly the same as the processing in Step 413 of the existing deactivation procedure.

In the present embodiment, if the GPRS detach procedure is initiated by UE1, UE1 automatically deletes the MBMS UE contexts stored locally. If the GPRS detach procedure is initiated by the network, UE1 deletes the MBMS UE contexts stored locally after receiving a Detach Request message from the SGSN.

Compared with the prior art, the present embodiment starts the deactivation procedure with the original Step 407, Steps 405 and 406 are omitted, and all the MBMS UE contexts related to UE1 are deleted through one message in every related step. Thus, the complexity of processing is reduced greatly and the efficiency of processing is improved.

### Embodiment 2

In the present embodiment, UE1 is still taken as the example and all the MBMS UE contexts activated by UE1 are linked to a default PDP context. UE1, an SGSN or a GGSN initiates a GPRS detach procedure for UE1, UE1 is in a PMM-CONNECTED state and linked towards an RAN, and the RAN has deleted all Radio Access Bearers (RABs) of UE1 during the GPRS detach procedure. Therefore, the RAN has automatically deleted all the MBMS UE contexts stored in the RAN and related to UE1. Accordingly, the SGSN starts an MBMS deactivation procedure with Step 409 shown in Figure 4 to delete all the MBMS UE contexts. As shown in Figure 6, the MBMS deactivation procedure specifically includes the following steps.

Steps 609 - 613: are exactly the same as the processing and the description of Steps 509 ∼ 513 in Embodiment 1.

Likewise, in the present embodiment, if the GPRS detach procedure is initiated by UE1, UE1 automatically deletes the MBMS UE contexts stored locally. If the GPRS detach procedure is initiated by the network, UE1 deletes the MBMS UE contexts stored locally after receiving a Detach Request message from the SGSN.

Compared with the prior art, the present embodiment starts the deactivation procedure with the original Step 409, Steps 405 to 408 are omitted, and all the MBMS UE contexts related to UE1 are deleted through one message in every related step. Thus, the complexity of processing is reduced greatly and the efficiency of processing is improved.

Because no de-linking is needed in the case that UE1 is in a PMM-IDLE state, the SGSN also starts an MBMS deactivation procedure with Step 409 as shown in Figure 4, that is, perform the MBMS deactivation procedure in accordance with the present embodiment.

In practice, if a new SGSN does not support the MBMS when a UE initiates an SGSN routing area update procedure, the old SGSN initiates the MBMS deactivation procedure all the same to delete all the MBMS UE contexts related to the UE. In this case, the MBMS deactivation procedure initiated by the SGSN is the same as the MBMS deactivation procedure initiated by the GPRS detach procedure. That is, the deactivation procedure described in Embodiments I and 2 are also applicable to the case that an MBMS deactivation procedure is initiated because the new SGSN does not support the MBMS when an SGSN routing area update procedure is performed.

### Embodiment 3

In the present embodiment, UE1 is still taken as the example, all the MBMS UE contexts activated by UE1 are linked to a default PDP context, and the default PDP context is deactivated by UE1, an SGSN or a GGSN. In this case, UE1 is in a PMM-CONNECTED state and is linked towards an RAN, and with respect to a PDP context deactivation procedure, the RAN does not know the association between the deactivated PDP context and the MBMS UE contexts. Therefore, the SGSN needs to start the MBMS deactivating procedure with Step 407 as shown in Figure 4 to delete all the MBMS UE contexts. As shown in Figure 5, the MBMS deactivation procedure specifically includes the following steps.

Step 11: the SGSN sends an MBMS UE De-Linking Request message, carrying an IP multicast address, an APN and a TMGI, to an RNC. And all the MBMS UE contexts corresponding to UE1 in the RAN need to be deleted because the deactivation of the PDP context linked to the MBMS UE contexts is initiated. Therefore, the MBMS UE De-Linking Request message also contains a remove indication indicating that all the MBMS UE contexts related to UE1 need to be deleted.

After receiving the MBMS UE De-Linking Request message carrying the remove indication, the RAN deletes all the MBMS UE contexts stored in the RAN and related to UE1, and sends an MBMS UE De-Linking Response message. The MBMS UE De-Linking Response message may contain the remove indication.

Steps 12 ∼ 17: are exactly the same as the processing and description of Steps 508 ∼ 513 in Embodiment 1.

### Embodiment 4

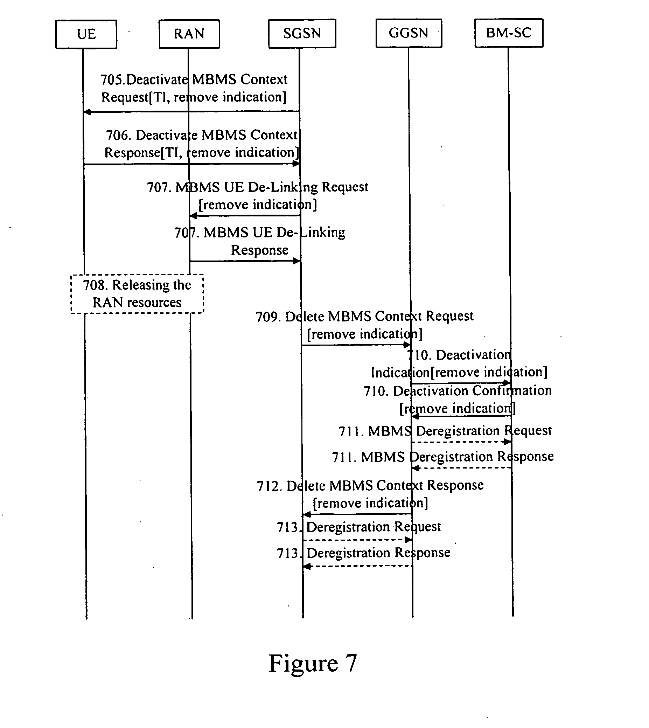

In the present embodiment, UE1 is still taken as an example, all the MBMS UE contexts activated by UE1 are linked to a default PDP context, and the default PDP context is deactivated by UE1, an SGSN or a GGSN. The SGSN starts an MBMS deactivation procedure with Step 405 as shown in Figure 4. As shown in Figure 7, the MBMS deactivation procedure specifically includes the following steps.

Step 705: the SGSN sends a Deactivate MBMS Context Request message including a TI, and identifying the MBMS UE context to be deleted by UE1, to UE1. Since the PDP context linked to the MBMS UE contexts is deactivated, the Deactivate MBMS Context Request message also contains a remove indication indicating that all the MBMS UE contexts linked to the deactivated PDP context are to be deleted.

Step 706: after receiving the Deactivate MBMS Context Request message carrying the remove indication, UE1 deletes all the MBMS UE contexts stored in the UE1, and sends a Deactivate MBMS Context Response message including the TI and the remove indication to the SGSN. The Deactivate MBMS Context Response message may contain the remove indication.

Steps 707 ∼713: are exactly the same as the processing and description of Steps 507 ∼513 in Embodiment 1.

### Embodiment 5

In the present embodiment, UE1 is taken as an example, the MBMS UE contexts activated by UE1 are linked to different PDP contexts. After a PDP context is deactivated by UE1, an SGSN or a GGSN, the MBMS UE contexts linked to the deactivated PDP context need to be deleted while the MBMS UE contexts that are not linked to the deactivated PDP context do not need to be deleted. In this case, FUEL is in a PMM-CONNECTED state and is linked towards an RAN. The SGSN starts the MBMS deactivation procedure with Step 407 shown in Figure 4 to delete the related MBMS UE contexts.

In the present embodiment, since a PDP context linked to MBMS UE contexts is deactivated, UE1 needs to delete the corresponding MBMS UE contexts locally. Specifically, if the PDP context deactivation procedure is initiated by UE1, UE1 deletes the MBMS UE contexts stored locally and linked to the deactivated PDP context by the Linked_NSAPI after receiving a Deactivate PDP Context Response message sent by the SGSN to UE1. If the PDP context deactivation procedure is initiated by the SGSN or the GGSN, UE1 deletes the MBMS UE contexts stored locally and linked to the deactivated PDP context by the Linked_NSAPI after receiving a Deactivate PDP Context Request message. Refer to the 3GPP 23.060 specification for the detailed PDP context delete procedure, which is a standard procedure defined by the 3GPP and will not be described herein.

The steps of the present embodiment are similar to those of Embodiment 1 and specifically include the following steps.

Step 21: the SGSN sends an MBMS UE De-Linking Request message, carrying an IP multicast address, an APN and a TMGI, to an RNC. Since the PDP context linked to the MBMS UE contexts is deactivated, the SGSN may contain identifiers of a plurality of MBMS UE contexts in an MBMS UE De-Linking Request message. Thus, the RAN will delete the MBMS UE contexts corresponding to UE1 and linked to the deactivated PDP context according to the identifiers of the MBMS UE contexts, and sends an MBMS UE De-Linking response message carrying the TMGI to the SGSN.

In this step, the method for identifying the plurality of MBMS UE contexts may use a combination of a plurality of IP multicast address, APN and TMGI, or use a Linked NSAPI, that is, the NSAPI of the PDP context bound to all the MBMS UE contexts and recorded in the SGSN. If the Linked NSAPI is used, the SGSN needs to send the NSAPI of the PDP context bound to the MBMS UE contexts to the RAN when performing an MBMS UE linking mechanism. The RAN stores the NSAPI as the Linked NSAPI in the MBMS UE contexts in the RAN. Refer to the 3GPP 23.246 specification for the detailed linking mechanism, which will not be described herein.

Step 22: is exactly the same as the processing in Step 408 of the existing deactivating procedure.

Step 23: the SGSN sends a Delete MBMS Context Request message carrying the MBMS_NSAPI to the GGSN holding MBMS UE contexts, and the GGSN holding MBMS UE contexts may be different from the GGSN having received the IGMP Leave message. Since the PDP context linked to the MBMS UE contexts is deleted in the PDP context deactivation procedure, the plurality of MBMS UE contexts linked to the PDP context may be deleted at the moment. Therefore, in the Delete MBMS Context Request message sent by the SGSN to the GGSN, the identifiers of the plurality of MBMS UE contexts linked to the PDP context are contained in one message.

In this step, the method for identifying the plurality of MBMS UE contexts may use a plurality of MBMS NSAPIs, or use a Linked NSAPI, that is, the NSAPI of the PDP context bound to all the MBMS UE contexts and recorded in the SGSN. If the Linked NSAPI is used, the SGSN needs to send the NSAPI of the PDP context bound to the MBMS UE contexts as the Linked NSAPI to the GGSN when performing an MBMS multicast service activation procedure. The GGSN stores the NSAPI into its own related MBMS UE contexts. Refer to the 3GPP 23.246 specification for the detailed MBMS multicast service activation procedure, which will not be described herein.

Step 24: after receiving the Delete MBMS Context Request message including the identifiers of the MBMS UE contexts linked to the deactivated PDP context, the GGSN deletes its own MBMS UE contexts of UE1 linked to the deactivated PDP context according to the identifiers of the MBMS UE contexts in the Delete MBMS Context Request message, and sends a Deactivation Indication message carrying the identifiers of all the MBMS UE contexts linked to the deactivated PDP context, to the BM-SC to confirm that the MBMS UE contexts have been deactivated successfully.

After receiving the Deactivation Indication message including the identifiers of the MBMS UE contexts linked to the deactivated PDP context, the BM-SC deletes the MBMS UE contexts stored in the BM-SC and linked to the deactivated PDP context according to the identifiers of the MBMS UE contexts in the Deactivation Indication message, and sends a Deactivation Confirmation message to the GGSN.

In this step, the method for identifying the plurality of MBMS UE contexts may use a plurality of TMGIs, or use a Linked NSAPI, that is, the NSAPI of the PDP context bound to all the MBMS UE contexts and recorded in the SGSN. If the Linked NSAPI is used, the GGSN needs to store the NSAPI of the PDP context bound to the MBMS UE contexts as the Linked NSAPI in the MBMS UE contexts of the BM-SC when performing an MBMS multicast service activation procedure. Refer to the 3GPP 23.246 specification for the detailed MBMS multicast service activation procedure, which will not be described herein.

Step 25: is exactly the same as the processing in Step 411 of the existing deactivation procedure.

Step 26: the GGSN sends a Delete MBMS Context Response message to the SGSN to confirm that the related MBMS UE contexts have been deleted, and after receiving the message, the SGSN deletes the MBMS UE contexts stored in the SGSN and linked to the deactivated PDP context.

Step 27: is exactly the same as the processing in Step 413 of the existing deactivation procedure.

In the present embodiment, the identifiers of the plurality of MBMS UE contexts to be deleted are used for the remove indication.

### Embodiment 6

In the present embodiment, UE1 is taken as an example, and the MBMS UE contexts activated by UE1 are linked to different PDP contexts. After a PDP context is deactivated by UE1, an SGSN or a GGSN, the MBMS UE contexts linked to the deactivated PDP context need to be deleted while the MBMS UE contexts not linked to the deactivated PDP context do not need to be deleted. Similar to that of Embodiment 4, the SGSN starts the MBMS deactivation procedure with Step 705 as shown in Figure 7 to delete the related MBMS UE contexts.

In the present embodiment, UE1 does not delete MBMS UE contexts locally, and the SGSN contains the TI and the remove indication in the Deactivate MBMS Context Request message in Step 704 as shown in Figure 7.

After receiving the Deactivate MBMS Context Request message carrying the remove indication, UE1 finds a corresponding MBMS UE context according to the TI, finds the Linked NSAPI stored in the MBMS UE context, and deletes all the MBMS UE contexts storing the Linked NSAPI in UE1.

Likewise, the remove indication may be contained or not be contained in the process of returning a Deactivate MBMS Context Response message by UE1.

Other steps of the procedure are exactly the same as those of Embodiment 4.

In the present embodiment, the remove indication contained in Steps 705 and 705 is an identifier, and accordingly, the remove indication contained in Step 407 and its subsequent steps includes identifiers of the plurality of MBMS UE contexts to be deleted.

The present invention has been described and illustrated with reference to the embodiments thereof and the drawings. It shall be obvious to those skilled in the art that those embodiments and drawings are merely illustrative and not restrictive, that the present invention shall not be limited the embodiments disclosed here, and that various modifications and variations may be made thereto in light of the descriptions and the drawings without departing from the scope of the present invention as defined in the accompanying claims.

## Claims

1. A method for deactivating Multimedia Broadcast Multicast Services, MBMSs, related to a user equipment UE, the method comprising the following steps:
a) when all MBMS UE contexts activated by the UE are linked to a default PDP context and deactivation of the default PDP context has been initiated, then generating a remove indication indicating that all the MBMS UE contexts related to the UE need to be deleted, and when MBMS UE contexts activated by the UE are linked to different PDP contexts and deactivation of one of said different PDP contexts has been initiated, then generating a remove indication identifying the MBMS UE contexts related to the UE and linked to the deactivated PDP context; and
b) sending, by a Serving GPRS Support Node, SGSN, a Delete MBMS Context request message carrying the remove indication to a Gateway GPRS Support Node, GGSN, and
c) deleting, by the GGSN, a plurality of MBMS UE contexts related to the UE and stored in the GGSN, the deleting being according to the remove indication;
d) returning, by the GGSN, a Delete MBMS Context Response message to the SGSN; and
e) deleting, by the SGSN, a plurality of MBMS UE contexts stored in the SGSN in response to the Delete MBMS Context Response message.

2. The method of Claim 1, wherein the Delete MBMS Context Response message carries the remove indication.

3. The method of any of Claims 1-2, wherein between steps c) and d) the following steps are carried out:
sending, by the GGSN, a Deactivation Indication message carrying the remove indication to a Broadcast Multicast Service Center, BM-SC; and
deleting, by the BM-SC, a plurality of MBMS UE contexts stored in the BM-SC according to the remove indication in response to the Deactivation Indication message sent from the GGSN, and sending, by the BM-SC, a Deactivation Confirmation message to the GGSN.

4. The method of claim 3, wherein the deactivation of the default PDP context is initiated by the UE, the SGSN or the GGSN by means of a GPRS Detach procedure.

5. The method of Claim 4, wherein when the UE is in a PMM-CONNECTED state and linked towards a Radio Access Network, RAN, the method further comprises: before sending the Delete MBMS Context Request message from the SGSN to the GGSN,
sending, by the SGSN, a MBMS UE De-linking Request message carrying the remove indication to the RAN;
deleting, by the RAN, a plurality of MBMS UE contexts stored in the RAN according to the remove indication in response to the MBMS UE De-linking Request message; and
returning, by the RAN, a MBMS UE De-linking Response message to the SGSN.

6. The method of claim 4, wherein when the UE is in a PMM-CONNECTED state and linked towards an RAN, and the RAN has deleted all Radio Access Bearers of the UE during the GPRS Detach procedure, the method further comprises: before sending the Delete MBMS Context Request message from the SGSN to the GGSN automatically deleting by the RAN all the MBMS UE contexts stored in the RAN and related to the UE.

7. The method of any of claims 4-6, wherein when the GPRS Detach procedure is initiated by the UE, the UE automatically deletes the MBMS UE contexts stored locally and if the GPRS detach procedure is initiated by the SGSN or GGSN, the UE deletes the MBMS UE contexts stored locally after receiving a Detach Request message from the SGSN.

8. The method of claim 3, wherein the deactivation of the default PDP context is initiated by the UE, an SGSN or a GGSN by means of a PDP context Deactivate procedure.

9. The method of claim 8, wherein when the UE is in a PMM-CONNECTED state and is linked towards a Radio Access Network, RAN, and the RAN does not know the association between the deactivated PDP context and the MBMS UE contexts, the method further comprises: before sending the Delete MBMS Context Request message from the SGSN to the GGSN,
sending, by the SGSN, a MBMS UE De-linking Request message carrying the remove indication to the RAN;
deleting, by the RAN, a plurality of MBMS UE contexts stored in the RAN according to the remove indication in response to the MBMS UE De-linking Request message; and
returning, by the RAN, a MBMS UE De-linking Response message to the SGSN.

10. The method of Claim 9, wherein the MBMS UE De-linking Response message returned by the RAN to the SGSN carries the remove indication.

11. The method of any of claims 9-10, further comprising: before sending the MBMS UE De-linking Request message by the SGSN to RAN,
sending, by the SGSN, a Deactivate MBMS Context Request message carrying the remove indication to the UE; and
deleting, by the UE, a plurality of MBMS UE contexts stored in the UE according to the remove indication in response to the Deactivate MBMS Context Request message; and
returning, by the UE, a Deactivate MBMS Context Response message to the SGSN.

12. The method of claim 3, wherein the deactivation of one of said different PDP contexts is initiated by the UE, the SGSN or the GGSN by means of a PDP context Deactivate procedure.

13. The method of Claim 12, wherein identifying the plurality of MBMS UE contexts comprises either using a plurality of identifiers of the MBMS UE contexts or using a single identifier of the PDP context linked to the plurality of MBMS UE contexts and recorded in the SGSN.

14. The method of claim 13, wherein the single identifier of the PDP context linked to the plurality of MBMS UE contexts and recorded in the SGSN is a Linked NSAPI.

15. A system for deactivating Multimedia Broadcast Multicast Services, MBMSs, related to a user equipment UE, the system comprising the following means:
a Serving GPRS Support Node, SGSN, including means responsive to all MBMS UE contexts activated by the UE being linked to a default PDP context and deactivation of the default PDP context having been initiated, said means adapted to generate a remove indication indicating that all the MBMS UE contexts related to the UE need to be deleted, and the SGSN further including means responsive to MBMS UE contexts activated by the UE being linked to different PDP contexts and deactivation of one of said different PDP contexts having been initiated, said means adapted to generate a remove indication identifying the MBMS UE contexts related to the UE and linked to the deactivated PDP context; and
the SGSN including means adapted to send a Delete MBMS Context Request message carrying the remove indication to a Gateway GPRS Support Node, GGSN; and
the GGSN including means adapted to delete a plurality of MBMS UE contexts related to the UE and stored in the GGSN, said deletion being according to the remove indication; and
the GGSN including means adapted to return a Delete MBMS Context Response message to the SGSN; and
the SGSN including means adapted to delete a plurality of MBMS UE contexts stored in the SGSN in response to the Delete MBMS Context Response message.

16. The system of claim 15, wherein the Delete MBMS Context Response message carries the remove indication.

17. The system of claim 15 or 16, wherein the GGSN further includes means adapted to send a Deactivation Indication message carrying the remove indication to a Broadcast Multicast Service Center, BM-SC; and the BM-SC includes means adapted to delete a plurality of MBMS UE contexts stored in the BM-SC according to the remove indication in response to the Deactivation Indication message sent from the GGSN, and means adapted to send, by the BM-SC, a Deactivation Confirmation message to the GGSN.

18. The system of claim 17, wherein the deactivation of the default PDP context is initiated by the UE, the SGSN or the GGSN by means of a GPRS Detach procedure.

19. The system of claim 18, wherein the SGSN further includes means responsive to the UE being in a PMM-CONNECTED state and linked towards a Radio Access Network, RAN, said means adapted to send a MBMS UE De-linking Request message carrying the remove indication to the RAN; and
the RAN including means adapted to delete a plurality of MBMS UE contexts stored in the RAN according to the remove indication in response to the MBMS UE De-linking Request message; and
the RAN including means adapted to return a MBMS UE De-linking Response message to the SGSN.

20. The system of claim 17, wherein the deactivation of the default PDP context is initiated by the UE, the SGSN or the GGSN by means of a PDP context Deactivate procedure.

21. The system of claim 20, wherein when the SGSN further include means responsive to the UE being in a PMM-CONNECTED state and linked towards a Radio Access Network, RAN, and the RAN not knowing the association between the deactivated PDP context and the MBMS UE contexts, said means adapted to send a MBMS UE De-linking Request message carrying the remove indication to the RAN; and
the RAN, including means adapted to delete a plurality of MBMS UE contexts stored in the RAN according to the remove indication in response to the MBMS UE De-linking Request message; and
the RAN including means adapted to return a MBMS UE De-linking Response message to the SGSN.

22. The system of claim 17, wherein the deactivation of one of said different PDP contexts is initiated by the UE, the SGSN or the GGSN by means of a PDP context Deactivate procedure.

## Patentansprüche

1. Verfahren zum Deaktivieren von Multimedia Broadcast Multicast-Diensten, MBMSs, die mit einem Benutzergerät UE in Beziehung stehen, wobei das Verfahren die Schritte umfasst, dass
a) wenn alle durch das UE aktivierten MBMS UE-Kontexte mit einem Standard-PDP-Kontext gekoppelt sind und eine Deaktivierung des Standard-PDP-Kontexts initiiert wurde, ein Entfernungshinweis erzeugt wird, der angibt, dass alle MBMS UE-Kontexte, die mit dem UE in Beziehung stehen, gelöscht werden müssen, und wenn durch das UE aktivierte MBMS UE-Kontexte mit verschiedenen PDP-Kontexten gekoppelt sind und eine Deaktivierung eines der verschiedenen PDP-Kontexte initiiert wurde, ein Entfernungshinweis erzeugt wird, der die MBMS UE-Kontexte identifiziert, die mit dem UE in Beziehung stehen und mit dem deaktivierten PDP-Kontext gekoppelt sind; und
b) durch einen Serving GPRS Support Node, SGSN, eine MBMS-Kontext-Löschen-Anforderungsnachricht, die den Entfernungshinweis trägt, an einen Gateway GPRS Support Node, GGSN, gesendet wird, und
c) durch den GGSN mehrere MBMS UE-Kontexte, die mit dem UE in Beziehung stehen und in dem GGSN gespeichert sind, gelöscht werden, wobei das Löschen gemäß dem Entfernungshinweis erfolgt;
d) durch den GGSN eine MBMS-Kontext-Löschen-Antwortnachricht an den SGSN zurückgesendet wird; und
e) durch den SGSN mehrere MBMS UE-Kontexte, die in dem SGSN gespeichert sind, in Ansprechen auf die MBMS-Kontext-Löschen-Antwortnachricht gelöscht werden.

2. Verfahren nach Anspruch 1,
wobei die MBMS-Kontext-Löschen-Antwortnachricht den Entfernungshinweis trägt.

3. Verfahren nach einem der Ansprüche 1 - 2,
wobei zwischen den Schritten c) und d) die Schritte ausgeführt werden, dass
durch den GGSN eine Deaktivierungshinweisnachricht, die den Entfernungshinweis trägt, an eine Broadcast Multicast-Dienstzentrale, BM-SC, gesendet wird; und
durch die BM-SC mehrere MBMS UE-Kontexte, die in der BM-SC gespeichert sind, gemäß dem Entfernungshinweis in Ansprechen auf die von dem GGSN gesendete Deaktivierungshinweisnachricht gelöscht werden und durch die BM-SC eine Deaktivierungsbestätigungsnachricht an den GGSN gesendet wird.

4. Verfahren nach Anspruch 3,
wobei die Deaktivierung des Standard-PDP-Kontexts durch das UE, den SGSN oder den GGSN mittels einer GPRS-Abmeldeprozedur initiiert wird.

5. Verfahren nach Anspruch 4,
wobei, wenn sich das UE in einem PMM-VERBUNDEN-Zustand befindet und mit einem Funkzugangsnetz, RAN, gekoppelt ist, das Verfahren ferner umfasst, dass: vor dem Senden der MBMS-Kontext-Löschen-Anforderungsnachricht von dem SGSN an den GGSN durch den SGSN eine MBMS UE-Entkopplungsanforderungsnachricht, die den Entfernungshinweis trägt, an das RAN gesendet wird;
durch das RAN mehrere MBMS UE-Kontexte, die in dem RAN gespeichert sind, gemäß dem Entfernungshinweis in Ansprechen auf die MBMS UE-Entkopplungsanforderungsnachricht gelöscht werden; und
durch das RAN eine MBMS UE-Entkopplungsantwortnachricht an den SGSN zurückgesendet wird.

6. Verfahren nach Anspruch 4,
wobei, wenn sich das UE in einem PMM-VERBUNDEN-Zustand befindet und mit einem RAN gekoppelt ist und das RAN während der GPRS-Abmeldeprozedur alle Funkzugangsträger des UE gelöscht hat, das Verfahren ferner umfasst, dass: vor dem Senden der MBMS-Kontext-Löschen-Anforderungsnachricht von dem SGSN an den GGSN durch das RAN automatisch alle MBMS UE-Kontexte gelöscht werden, die in dem RAN gespeichert sind und mit dem UE in Beziehung stehen.

7. Verfahren nach einem der Ansprüche 4-6,
wobei, wenn die GPRS-Abmeldeprozedur durch das UE initiiert wird, das UE automatisch die lokal gespeicherten MBMS UE-Kontexte löscht, und wenn die GPRS-Abmeldeprozedur durch den SGSN oder den GGSN initiiert wird, das UE die lokal gespeicherten MBMS UE-Kontexte nach dem Empfangen einer Abmeldeanforderungsnachricht von dem SGSN löscht.

8. Verfahren nach Anspruch 3,
wobei die Deaktivierung des Standard-PDP-Kontexts durch das UE, einen SGSN oder einen GGSN mittels einer PDP-Kontext-Deaktivieren-Prozedur initiiert wird.

9. Verfahren nach Anspruch 8,
wobei, wenn sich das UE in einem PMM-VERBUNDEN-Zustand befindet und mit einem Funkzugangsnetz, RAN, gekoppelt ist und das RAN die Assoziation zwischen dem deaktivierten PDP-Kontext und den MBMS UE-Kontexten nicht kennt, das Verfahren ferner umfasst, dass: vor dem Senden der MBMS-Kontext-Löschen-Anforderungsnachricht von dem SGSN an den GGSN
durch den SGSN eine MBMS UE-Entkopplungsanforderungsnachricht, die den Entfernungshinweis trägt, an das RAN gesendet wird; durch das RAN mehrere MBMS UE-Kontexte, die in dem RAN gespeichert sind, gemäß dem Entfernungshinweis in Ansprechen auf die MBMS UE-Entkopplungsanforderungsnachricht gelöscht werden; und
durch das RAN eine MBMS UE-Entkopplungsantwortnachricht an den SGSN zurückgesendet wird.

10. Verfahren nach Anspruch 9,
wobei die durch das RAN an den SGSN zurückgesendete MBMS UE-Entkopplungsantwortnachricht den Entfernungshinweis trägt.

11. Verfahren nach einem der Ansprüche 9 - 10,
das ferner umfasst, dass: vor dem Senden der MBMS UE-Entkopplungsanforderungsnachricht durch den SGSN an das RAN durch den SGSN eine MBMS-Kontext-Deaktivieren-Anforderungsnachricht, die den Entfernungshinweis trägt, an das UE gesendet wird; und
durch das UE mehrere MBMS UE-Kontexte, die in dem UE gespeichert sind, gemäß dem Entfernungshinweis in Ansprechen auf die MBMS-Kontext-Deaktivieren-Anforderungsnachricht gelöscht werden; und
durch das UE eine MBMS-Kontext-Deaktivieren-Antwortnachricht an den SGSN zurückgesendet wird.

12. Verfahren nach Anspruch 3,
wobei die Deaktivierung eines der verschiedenen PDP-Kontexte durch das UE, den SGSN oder den GGSN mittels einer PDP-Kontext-Deaktivieren-Prozedur initiiert wird.

13. Verfahren nach Anspruch 12,
wobei das Identifizieren der mehreren MBMS UE-Kontexte umfasst, dass entweder mehrere Identifikatoren der MBMS UE-Kontexte verwendet werden oder ein einzelner Identifikator des PDP-Kontexts verwendet wird, der mit den mehreren MBMS UE-Kontexten gekoppelt ist und in dem SGSN aufgezeichnet ist.

14. Verfahren nach Anspruch 13,
wobei der einzelne Identifikator des PDP-Kontexts, der mit den mehreren MBMS UE-Kontexten gekoppelt ist und in dem SGSN aufgezeichnet ist, ein gekoppelter NSAPI ist.

15. System zum Deaktivieren von Multimedia Broadcast Multicast-Diensten, MBMSs, die mit einem Benutzergerät UE in Beziehung stehen, wobei das System das folgende Mittel umfasst:
einen Serving GPRS Support Node, SGSN, der ein Mittel umfasst, das darauf anspricht, dass alle durch das UE aktivierten MBMS UE-Kontexte mit einem Standard-PDP-Kontext gekoppelt sind und eine Deaktivierung des Standard-PDP-Kontexts initiiert wurde, wobei das Mittel geeignet ist, um einen Entfernungshinweis zu erzeugen, der angibt, dass alle MBMS UE-Kontexte, die mit dem UE in Beziehung stehen, gelöscht werden müssen, und wobei der SGSN ferner ein Mittel umfasst, das darauf anspricht, dass durch das UE aktivierte MBMS UE-Kontexte mit verschiedenen PDP-Kontexten gekoppelt sind und eine Deaktivierung eines der verschiedenen PDP-Kontexte initiiert wurde, wobei das Mittel geeignet ist, um einen Entfernungshinweis zu erzeugen, der die MBMS UE-Kontexte identifiziert, die mit dem UE in Beziehung stehen und mit dem deaktivierten PDP-Kontext gekoppelt sind; und
wobei der SGSN ein Mittel umfasst, das geeignet ist, um eine MBMS-Kontext-Löschen-Anforderungsnachricht, die den Entfernungshinweis trägt, an einen Gateway GPRS Support Node, GGSN, zu senden; und
wobei der GGSN ein Mittel umfasst, das geeignet ist, um mehrere MBMS UE-Kontexte, die mit dem UE in Beziehung stehen und in dem GGSN gespeichert sind, zu löschen, wobei das Löschen gemäß dem Entfernungshinweis erfolgt; und
wobei der GGSN ein Mittel umfasst, das geeignet ist, um eine MBMS-Kontext-Löschen-Antwortnachricht an den SGSN zurückzusenden; und
wobei der SGSN ein Mittel umfasst, das geeignet ist, um mehrere MBMS UE-Kontexte, die in dem SGSN gespeichert sind, in Ansprechen auf die MBMS-Kontext-Löschen-Antwortnachricht zu löschen.

16. System nach Anspruch 15,
wobei die MBMS-Kontext-Löschen-Antwortnachricht den Entfernungshinweis trägt.

17. System nach Anspruch 15 oder 16,
wobei der GGSN ferner ein Mittel umfasst, das geeignet ist, um eine Deaktivierungshinweisnachricht, die den Entfernungshinweis trägt, an eine Broadcast Multicast-Dienstzentrale, BM-SC, zu senden; und
wobei die BM-SC ein Mittel, das geeignet ist, um mehrere MBMS UE-Kontexte, die in der BM-SC gespeichert sind, gemäß dem Entfernungshinweis in Ansprechen auf die von dem GGSN gesendete Deaktivierungshinweisnachricht zu löschen, und ein Mittel umfasst, das geeignet ist, um durch die BM-SC eine Deaktivierungsbestätigungsnachricht an den GGSN zu senden.

18. System nach Anspruch 17,
wobei die Deaktivierung des Standard-PDP-Kontexts durch das UE, den SGSN oder den GGSN mittels einer GPRS-Abmeldeprozedur initiiert wird.

19. System nach Anspruch 18,
wobei der SGSN ferner ein Mittel umfasst, das darauf anspricht, dass sich das UE in einem PMM-VERBUNDEN-Zustand befindet und mit einem Funkzugangsnetz, RAN, gekoppelt ist, wobei das Mittel geeignet ist, um eine MBMS UE-Entkopplungsanforderungsnachricht, die den Entfernungshinweis trägt, an das RAN zu senden; und
wobei das RAN ein Mittel umfasst, das geeignet ist, um mehrere MBMS UE-Kontexte, die in dem RAN gespeichert sind, gemäß dem Entfernungshinweis in Ansprechen auf die MBMS UE-Entkopplungsanforderungsnachricht zu löschen; und
wobei das RAN ein Mittel umfasst, das geeignet ist, um eine MBMS UE-Entkopplungsantwortnachricht an den SGSN zurückzusenden.

20. System nach Anspruch 17,
wobei die Deaktivierung des Standard-PDP-Kontexts durch das UE, den SGSN oder den GGSN mittels einer PDP-Kontext-Deaktivieren-Prozedur initiiert wird.

21. System nach Anspruch 20,
wobei, wenn der SGSN ferner ein Mittel umfasst, das darauf anspricht, dass sich das UE sich in einem PMM-VERBUNDEN-Zustand befindet und mit einem Funkzugangsnetz, RAN, gekoppelt ist, und das RAN die Assoziation zwischen dem deaktivierten PDP-Kontext und den MBMS UE-Kontexten nicht kennt, das Mittel geeignet ist, um eine MBMS UE-Entkopplungsanforderungsnachricht, die den Entfernungshinweis trägt, an das RAN zu senden; und
wobei das RAN ein Mittel umfasst, das geeignet ist, um mehrere MBMS UE-Kontexte, die in dem RAN gespeichert sind, gemäß dem Entfernungshinweis in Ansprechen auf die MBMS UE-Entkopplungsanforderungsnachricht zu löschen; und
wobei das RAN ein Mittel umfasst, das geeignet ist, um eine MBMS UE-Entkopplungsantwortnachricht an den SGSN zurückzusenden.

22. System nach Anspruch 17,
wobei die Deaktivierung eines der verschiedenen PDP-Kontexte durch das UE, den SGSN oder den GGSN mittels einer PDP-Kontext-Deaktivieren-Prozedur initiiert wird.

## Revendications

1. Procédé de désactivation de services MBMS - pour « *Multimedia Broadcast*/*Multicast Service* », Service de diffusion générale/de multidiffusion de multimédia associés à un équipement d'utilisateur, le procédé comprenant les étapes suivantes :
a) lorsque tous les contextes MBMS d'équipement d'utilisateur activés par l'équipement d'utilisateur sont liés à un contexte PDP par défaut et que la désactivation du contexte PDP par défaut a été lancée, produire une indication de suppression indiquant que tous les contextes MBMS d'équipement d'utilisateur intéressant l'équipement d'utilisateur doivent être supprimés et, lorsque des contextes MBMS d'équipement d'utilisateur activés par l'équipement d'utilisateur sont liés à des contextes PDP différents et que la désactivation de l'un desdits différents contextes PDP a été lancée, produire une indication de suppression qui identifie les contextes MBMS d'équipement d'utilisateur liés à l'équipement d'utilisateur et qui sont liés au contexte PDP désactivé ;
b) envoyer par un noeud SGSN - pour « *Serving GPRS Support Node* », Noeud de support GPRS de desserte - un message de demande de suppression de contexte MBMS qui transporte l'indication de suppression vers un noeud GGSN - pour « *Gateway GPRS Support Node* », Noeud de support GPRS faisant fonction de passerelle ;
c) supprimer par le noeud GGSN une pluralité de contextes MBMS d'équipement d'utilisateur liés à l'équipement d'utilisateur et stockés dans le noeud GGSN, la suppression se fondant sur l'indication de suppression ;
d) renvoyer au noeud SGSN par le noeud GGSN un message de réponse de suppression de contexte MBMS ; et
e) supprimer par le noeud SGSN une pluralité de contextes MBMS d'équipement d'utilisateur stockés dans le noeud SGSN, en réponse au message de réponse de suppression de contexte MBMS.

2. Procédé selon la revendication 1, dans lequel le message de réponse de suppression de contexte MBMS transporte l'indication de suppression.

3. Procédé selon l'une quelconque des revendications 1 et 2, dans lequel sont exécutées entre les étapes c) et d) les étapes suivantes :
envoyer par le noeud GGSN un message d'indication de désactivation transportant l'indication de suppression vers un centre BM-SC - pour « Broadcast *Multicast* Service *Center* », Centre de service de diffusion générale et de multidiffusion ; et
supprimer par le centre BM-SC une pluralité de contextes MBMS d'équipement d'utilisateur stockés dans le centre BM-SC, en fonction de l'indication de suppression, en réponse au message d'indication de désactivation envoyé par le noeud GGSN et envoyer au noeud GGSN par le centre BM-SC un message de confirmation de désactivation.

4. Procédé selon la revendication 3, dans lequel la désactivation du contexte PDP par défaut est lancée par l'équipement d'utilisateur, le noeud SSGN ou le noeud GGSN à l'aide d'une procédure de déconnexion GPRS.

5. Procédé selon la revendication 4, dans lequel, lorsque l'équipement d'utilisateur se trouve dans un état PMM-CONNECTED et est relié à un réseau d'accès radio, le procédé comprend en outre, avant l'envoi du message de demande de suppression de contexte MBMS par le noeud SGSN au noeud GGSN, les étapes suivantes :
envoyer au réseau d'accès radio, par le noeud SGSN, un message de demande de rupture de liaison MBMS d'équipement d'utilisateur transportant l'indication de suppression ;
supprimer par le réseau d'accès radio une pluralité de contextes MBMS d'équipement d'utilisateur stockés dans le réseau d'accès radio, en fonction de l'indication de suppression, en réponse au message de demande de rupture de liaison MBMS d'équipement utilisateur ; et
renvoyer au noeud SGSN par le réseau d'accès radio un message de réponse de rupture de liaison MBMS d'équipement d'utilisateur.

6. Procédé selon la revendication 4, dans lequel, lorsque l'équipement d'utilisateur se trouve dans un état PMM-CONNECTED et est relié à un réseau d'accès radio et lorsque le réseau d'accès radio a supprimé tous les supports d'accès radio de l'équipement d'utilisateur pendant la procédure de déconnexion GPRS, le procédé comprend en outre, avant l'envoi au noeud GGSN par le noeud SGSN d'un message de demande de suppression de contexte MBMS, l'étape consistant à supprimer automatiquement par le réseau d'accès radio tous les contextes MBMS d'équipement d'utilisateur stockés dans le réseau d'accès radio et liés à l'équipement d'utilisateur.

7. Procédé selon l'une quelconque des revendications 4 à 6, dans lequel, lorsque la procédure de déconnexion GPRS est lancée par l'équipement d'utilisateur, l'équipement d'utilisateur supprime automatiquement les contextes MBMS d'équipement d'utilisateur stockés localement et, si la procédure de déconnexion GPRS est lancée par le noeud SGSN ou GGSN, l'équipement d'utilisateur supprime les contextes MBMS d'équipement d'utilisateur stockés localement après réception d'un message de demande de déconnexion provenant du noeud SGSN.

8. Procédé selon la revendication 3, dans lequel la désactivation du contexte PDP par défaut est lancée par l'équipement d'utilisateur, un noeud SGSN ou un noeud GGSN à l'aide d'une procédure de désactivation de contexte PDP.

9. Procédé selon la revendication 8, dans lequel, lorsque l'équipement d'utilisateur se trouve dans un état PMM-CONNECTED et est relié à un réseau d'accès radio et lorsque le réseau d'accès radio ne connaît pas l'association entre le contexte PDP désactivé et les contextes MBMS d'équipement d'utilisateur, le procédé comprend en outre, avant l'envoi au noeud GGSN par le noeud SGSN du message de demande de suppression de contexte MBMS, les étapes suivantes :
envoyer au réseau d'accès radio par le noeud SGSN un message de demande de rupture de liaison MBMS d'équipement d'utilisateur transportant l'indication de suppression ;
supprimer par le réseau d'accès radio une pluralité de contextes MBMS d'équipement d'utilisateur stockés dans le réseau d'accès radio, en fonction de l'indication de suppression, en réponse au message de demande de rupture de liaison MBMS d'équipement d'utilisateur ; et
renvoyer au noeud SGSN par le réseau d'accès radio un message de réponse de rupture de liaison MBMS d'équipement d'utilisateur.

10. Procédé selon la revendication 9, dans lequel le message de réponse de rupture de liaison MBMS d'équipement d'utilisateur qui est renvoyé au noeud SGSN par le réseau d'accès radio transporte l'indication de suppression.

11. Procédé selon l'une quelconque des revendications 9 et 10, comprenant en outre, avant l'envoi du message de demande de rupture de liaison MBMS d'équipement d'utilisateur par le noeud SGSN au réseau d'accès radio, les étapes suivantes :
envoyer à l'équipement d'utilisateur, par le noeud SGSN, un message de demande de désactivation de contexte MBMS transportant l'indication de suppression ;
supprimer par l'équipement d'utilisateur une pluralité de contextes MBMS d'équipement d'utilisateur stockés dans l'équipement d'utilisateur, en fonction de l'indication de suppression, en réponse au message de demande de désactivation de contexte MBMS ; et
envoyer au noeud SGSN par l'équipement d'utilisateur un message de réponse de désactivation de contexte MBMS.

12. Procédé selon la revendication 3, dans lequel la désactivation de l'un desdits différents contextes PDP est lancée par l'équipement d'utilisateur, le noeud SGSN ou le noeud GGSN à l'aide d'une procédure de désactivation de contexte PDP.

13. Procédé selon la revendication 12, dans lequel l'identification de la pluralité de contextes MBMS d'équipement d'utilisateur comprend l'utilisation soit d'une pluralité d'identificateurs des contextes MBMS d'équipement d'utilisateur, soit d'un identificateur unique du contexte PDP lié à la pluralité de contextes MBMS d'équipement d'utilisateur et enregistré sur le noeud SGSN.

14. Procédé selon la revendication 13, dans lequel l'identificateur unique de contexte PDP lié à la pluralité de contextes MBMS d'équipement d'utilisateur et enregistré sur le noeud SGSN est un identificateur NSAPI lié.

15. Système de désactivation de services MBMS - pour « *Multimedia Broadcast*/*Multicast Service* », Service de diffusion générale/de multidiffusion de multimédia - associés à un équipement d'utilisateur, le système comprenant les moyens suivantes :
un noeud SGSN - pour « *Serving GPRS Support Node* », Noeud de support GPRS de desserte - comprenant un moyen qui répond au fait que tous les contextes MBMS d'équipement d'utilisateur activés par l'équipement d'utilisateur sont liés à un contexte PDP par défaut et au fait que la désactivation du contexte PDP par défaut a été lancée, ledit moyen étant conçu pour produire une indication de suppression indiquant que tous les contextes MBMS d'équipement d'utilisateur intéressant l'équipement d'utilisateur doivent être supprimés et le noeud SGSN comprenant en outre un moyen qui répond au fait que des contextes MBMS d'équipement d'utilisateur activés par l'équipement d'utilisateur sont liés à des contextes PDP différents et que la désactivation de l'un desdits différents contextes PDP a été lancée, ledit moyen étant conçu pour produire une indication de suppression qui identifie les contextes MBMS d'équipement d'utilisateur liés à l'équipement d'utilisateur et qui sont liés au contexte PDP désactivé ;
le noeud SGSN comprenant un moyen conçu pour envoyer un message de demande de suppression de contexte MBMS qui transporte l'indication de suppression vers un noeud GGSN - pour « *Gateway GPRS Support Node* », Noeud de support GPRS faisant fonction de passerelle ;
le noeud GGSN comprenant un moyen conçu pour supprimer une pluralité de contextes MBMS d'équipement d'utilisateur liés à l'équipement d'utilisateur et stockés dans le noeud GGSN, la suppression se fondant sur l'indication de suppression ;
le noeud GGSN comprenant un moyen conçu pour renvoyer au noeud SGSN un message de réponse de suppression de contexte MBMS ; et
le noeud SGSN comprenant un moyen conçu pour supprimer une pluralité de contextes MBMS d'équipement d'utilisateur stockés dans le noeud SGSN, en réponse au message de réponse de suppression de contexte MBMS.

16. Système selon la revendication 15, dans lequel le message de réponse de suppression de contexte MBMS transporte l'indication de suppression.

17. Système selon la revendication 15 ou 16, dans lequel le noeud GGSN comprend en outre un moyen conçu pour envoyer un message d'indication de désactivation transportant l'indication de suppression vers un centre BM-SC - pour « *Broadcast Multicast Service* Center », Centre de service de diffusion générale et de multidiffusion et dans lequel le centre BM-SC comprend un moyen conçu pour supprimer une pluralité de contextes MBMS d'équipement d'utilisateur stockés dans le centre BM-SC, en fonction de l'indication de suppression, en réponse au message d'indication de désactivation envoyé par le noeud GGSN et un moyen conçu pour envoyer au noeud GGSN par le centre BM-SC un message de confirmation de désactivation.

18. Système selon la revendication 17, dans lequel la désactivation du contexte PDP par défaut est lancée par l'équipement d'utilisateur, le noeud SSGN ou le noeud GGSN à l'aide d'une procédure de déconnexion GPRS.

19. Système selon la revendication 18, dans lequel le noeud SGSN comprend en outre un moyen qui répond au fait que l'équipement d'utilisateur se trouve dans un état PMM-CONNECTED et est relié à un réseau d'accès radio, ledit moyen étant conçu pour envoyer au réseau d'accès radio un message de demande de rupture de liaison MBMS d'équipement d'utilisateur transportant l'indication de suppression ;
dans lequel le réseau d'accès radio comprend un moyen conçu pour supprimer une pluralité de contextes MBMS d'équipement d'utilisateur stockés dans le réseau d'accès radio, en fonction de l'indication de suppression, en réponse au message de demande de rupture de liaison MBMS d'équipement utilisateur ; et
dans lequel le réseau d'accès radio comprend un moyen conçu pour renvoyer au noeud SGSN un message de réponse de rupture de liaison MBMS d'équipement d'utilisateur.

20. Système selon la revendication 17, dans lequel la désactivation du contexte PDP par défaut est lancée par l'équipement d'utilisateur, le noeud SGSN ou le noeud GGSN à l'aide d'une procédure de désactivation de contexte PDP.

21. Système selon la revendication 20, dans lequel le noeud SGSN comprend en outre un moyen qui répond au fait que l'équipement d'utilisateur se trouve dans un état PMM-CONNECTED et est relié à un réseau d'accès radio et au fait que le réseau d'accès radio ne connaît pas l'association entre le contexte PDP désactivé et les contextes MBMS d'équipement d'utilisateur, ledit moyen étant conçu pour envoyer au réseau d'accès radio un message de demande de rupture de liaison MBMS d'équipement d'utilisateur transportant l'indication de suppression ;
dans lequel le réseau d'accès radio comprend un moyen conçu pour supprimer une pluralité de contextes MBMS d'équipement d'utilisateur stockés dans le réseau d'accès radio, en fonction de l'indication de suppression, en réponse au message de demande de rupture de liaison MBMS d'équipement utilisateur ; et
dans lequel le réseau d'accès radio comprend un moyen conçu pour renvoyer au noeud SGSN un message de réponse de rupture de liaison MBMS d'équipement d'utilisateur.

22. Système selon la revendication 17, dans lequel la désactivation de l'un desdits différents contextes PDP est lancée par l'équipement d'utilisateur, le noeud SGSN ou le noeud GGSN à l'aide d'une procédure de désactivation de contexte PDP.
